# EUROPEAN PATENT APPLICATION

(11) **EP 4 826 238 A2**
(43) Date of publication of application: **21.10.2026**
(21) Application number: 26173461.0
(22) Date of filing: 20.04.2026
(51) Int. Cl.: F02K 5/00, F01D 15/10, F02C 3/113, F02C 7/36

(54) **AIRCRAFT POWERPLANT ELECTRIC MACHINE COUPLED TO DIFFERENTIAL GEARTRAIN**

(30) Priority: 18.04.2025 US 202519183351
(71) Applicant: RTX Corporation, Farmington, CT 06032 (US)
(72) Inventor: CLARK, Thomas E., Wells, 04090 (US); YAZICI, Murat, Glastonbury, 06033 (US)
(74) Representative: Dehns

(57) **Abstract**

An assembly is provided for an aircraft powerplant (20). This assembly includes a compressor section (43), a combustor section (44), a turbine section (45), a flowpath, a first rotating structure, a second rotating structure, a first electric machine (100B) and a differential. The flowpath extends through the compressor section (43), the combustor section (44) and the turbine section (45). The first rotating structure includes a first turbine rotor (65) arranged along the flowpath **in** the turbine section (45). The second rotating structure includes a second turbine rotor (66) arranged along the flowpath **in** the turbine section (45). The first electric machine (100B) includes a first electric machine rotor (104B) coaxial with the first rotating structure and the second rotating structure. The differential geartrain (118) operatively couples the first electric machine rotor (104B) to the first rotating structure and the second rotating structure.

## Description

### BACKGROUND OF THE DISCLOSURE

### 1. Technical Field

This disclosure relates generally to an aircraft and, more particularly, to an electric machine system for an aircraft powerplant.

### 2. Background Information

An aircraft powerplant such as a turbofan engine may include an electric machine system. Various types and configurations of electric machine systems are known in the art. While these known electric machine systems have various benefits, there is still room in the art for improvement.

### SUMMARY OF THE DISCLOSURE

According to an aspect of the present disclosure, an assembly is provided for an aircraft powerplant. This assembly includes a compressor section, a combustor section, a turbine section, a flowpath, a first rotating structure, a second rotating structure, a first electric machine and a differential. The flowpath extends through the compressor section, the combustor section and the turbine section. The first rotating structure includes a first turbine rotor arranged along the flowpath in the turbine section. The second rotating structure includes a second turbine rotor arranged along the flowpath in the turbine section. The first electric machine includes a first electric machine rotor coaxial with the first rotating structure and the second rotating structure. The differential geartrain operatively couples the first electric machine rotor to the first rotating structure and the second rotating structure.

According to another aspect of the present disclosure, another assembly is provided for an aircraft powerplant. This assembly includes a compressor section, a combustor section, a turbine section, a flowpath, a first rotating structure, a second rotating structure, a first electric machine, a differential and a second electric machine. The flowpath extends through the compressor section, the combustor section and the turbine section. The first rotating structure includes a first turbine rotor arranged along the flowpath in the turbine section. The second rotating structure includes a second turbine rotor arranged along the flowpath in the turbine section. The first electric machine includes a first electric machine rotor. The differential geartrain operatively couples the first electric machine rotor to the first rotating structure and the second rotating structure. The second electric machine includes a second electric machine rotor that is operatively coupled to the first rotating structure independent of the differential geartrain.

According to still another aspect of the present disclosure, another assembly is provided for an aircraft powerplant. This assembly includes a compressor section, a combustor section, a turbine section, a flowpath, a first rotating structure, a second rotating structure, a first electric machine and a differential. The flowpath extends through the compressor section, the combustor section and the turbine section. The first rotating structure includes a first turbine rotor arranged along the flowpath in the turbine section. The second rotating structure includes a second turbine rotor arranged along the flowpath in the turbine section. The first electric machine includes a first electric machine rotor that is rotatable about an axis. The differential geartrain operatively couples the first electric machine rotor to the first rotating structure and the second rotating structure. The turbine section is radially outboard of and axially overlaps the first electric machine and the differential geartrain. The differential geartrain is disposed axially between the first electric machine and the combustor section along the axis.

The following optional features may be applied to any of the above aspects.

The second rotating structure may also include a shaft section projecting axially through a bore of the first rotating structure.

The first electric machine rotor may be coaxial with the first rotating structure and/or the second rotating structure. In addition or alternatively, an axis of the first electric machine rotor may be offset from an axis of the second electric machine rotor.

The differential geartrain may be configured as or otherwise include an epicyclic geartrain.

The differential geartrain may include a sun gear, a ring gear, a plurality of intermediate gears and a carrier. The sun gear may be coupled to the first electric machine rotor. The ring gear may be coupled to the first engine rotating structure. The intermediate gears may be arranged circumferentially around the sun gear in an array. Each of the intermediate gears may be radially between and meshed with the sun gear and the ring gear. The carrier may be coupled to the second engine rotating structure. Each of the intermediate gears may be rotatably attached to the carrier.

The combustor section may include a combustor. The first turbine rotor may be arranged along the flowpath between the combustor and the second turbine rotor.

The assembly may also include a second electric machine comprising a second electric machine rotor. The second electric machine rotor may be operatively coupled to the first engine rotating structure independent of the differential geartrain.

The first turbine rotor may be arranged along the flowpath between the combustor section and the second turbine rotor.

The first electric machine may be arranged radially inboard of the core flowpath. The second electric machine may also or alternatively be arranged radially outboard of the core flowpath.

The first electric machine rotor may be rotatable about an axis. The differential geartrain may be disposed axially between the first electric machine and the combustor section along the axis.

The first electric machine rotor may be rotatable about an axis. The turbine section may axially overlap the differential geartrain.

The first electric machine rotor may be rotatable about an axis. The second turbine rotor may axially overlap the first electric machine.

The assembly may also include a turbine frame structure supporting the differential geartrain. The turbine frame structure may include a vane array. The turbine section may include a first turbine section and a second turbine section with the vane array between the first turbine section and the second turbine section along the flowpath.

The first turbine rotor may be disposed in the first turbine section. The second turbine rotor may be disposed in the second turbine section.

The assembly may also include a propulsor rotor operatively coupled to the second engine rotating structure independent of the differential geartrain.

The assembly may also include a second geartrain operatively coupled between the second engine rotating structure and the propulsor rotor.

The propulsor rotor may be a ducted propulsor rotor.

The propulsor rotor may be an open propulsor rotor.

The first electric machine may be configurable as an electric motor during an electric motor mode of operation and/or an electric generator during an electric generator mode of operation.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial sectional schematic illustration of an aircraft propulsion system with a ducted propulsor rotor.
FIG. 2 is a schematic illustration of a portion of the aircraft propulsion system at an electric machine system.
FIGS. 3A and 3B are graphs depicting engine rotating structure speed versus electric machine rotor speed for various electric machines.
FIG. 4 is an illustration of a differential geartrain coupled to various rotating elements of the aircraft propulsion system.
FIG. 5 is a sectional illustration of a portion of the aircraft propulsion system at the differential geartrain.
FIG. 6 is a sectional schematic illustration of the aircraft propulsion system with an open propulsor rotor.

### DETAILED DESCRIPTION

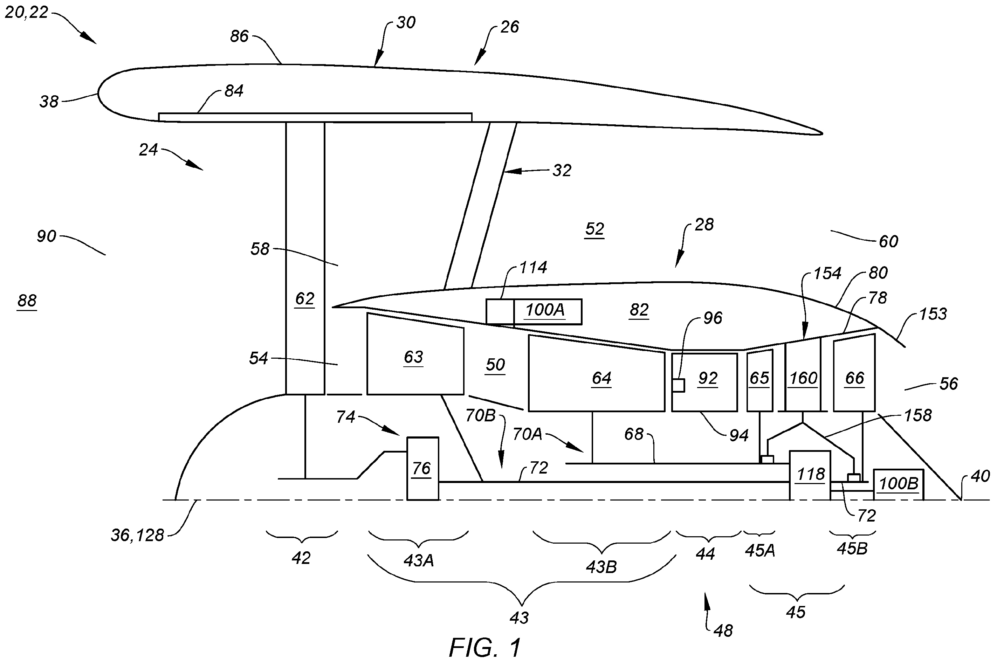

FIG. 1 illustrates a powerplant 20 for an aircraft. The aircraft may be an airplane, a drone (e.g., an unmanned aerial vehicle (UAV)) or any other manned or unmanned aerial vehicle or system. For ease of description, the aircraft powerplant 20 is described below as a propulsion system 22 for the aircraft and, more particularly, as a turbofan propulsion system. The aircraft powerplant 20 of the present disclosure, however, is not limited to such an exemplary propulsion system. The aircraft propulsion system 22, for example, may alternatively be configured as a turbojet propulsion system, a turboprop propulsion system, a turboshaft propulsion system, a propfan propulsion system, a pusher fan propulsion system, or any other type of ducted and/or open propulsor rotor propulsion system. Moreover, the aircraft powerplant 20 is not limited to propulsion system applications. The aircraft powerplant 20, for example, may also (or alternatively) be configured as an electrical power system for the aircraft; e.g., an auxiliary power unit (APU).

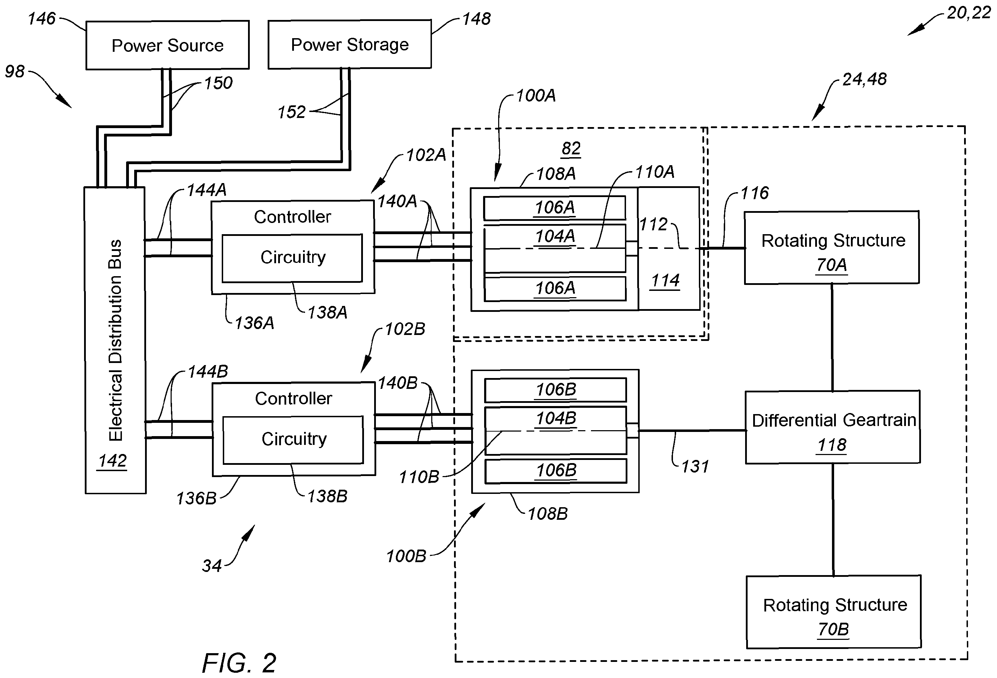

The aircraft propulsion system 22 includes a gas turbine engine 24 (e.g., a turbofan engine) housed within a stationary propulsion system housing 26, which propulsion system housing 26 of FIG. 1 includes an inner housing structure 28, an outer housing structure 30 and a guide vane structure 32 (e.g., a fan exit guide vane (FEGV) structure) extending radially between and connected to the inner housing structure 28 and the outer housing structure 30. The aircraft propulsion system 22 also includes an electric machine system 34 (see FIG. 2). The aircraft propulsion system 22 extends axially along an axis 36 of the aircraft propulsion system 22 between an axial upstream, forward end 38 of the aircraft propulsion system 22 and an axial downstream, aft end 40 of the aircraft propulsion system 22. Briefly, the propulsion system axis 36 may be a centerline axis of the aircraft propulsion system 22, the turbine engine 24 and/or one or more of its members. The propulsion system axis 36 may also or alternatively be a rotational axis for one or more members of the turbine engine 24.

The aircraft propulsion system 22 and its turbine engine 24 of FIG. 1 include a propulsor section 42 (e.g., a fan section), a compressor section 43, a combustor section 44 and a turbine section 45. The compressor section 43 of FIG. 1 includes a low pressure compressor (LPC) section 43A and a high pressure compressor (HPC) section 43B. The turbine section 45 of FIG. 1 includes a high pressure turbine (HPT) section 45A and a low pressure turbine (LPT) section 45B. At least (or only) the LPC section 43A, the HPC section 43B, the combustor section 44, the HPT section 45A and the LPT section 45B collectively form a core 48 (e.g., a gas generator) of the turbine engine 24. The aircraft propulsion system 22 and its turbine engine 24 of FIG. 1 also include a core flowpath 50 (e.g., an annular core flowpath) and a bypass flowpath 52 (e.g., an annular bypass flowpath). The core flowpath 50 extends sequentially through the LPC section 43A, the HPC section 43B, the combustor section 44, the HPT section 45A and the LPT section 45B from an airflow inlet 54 into the core flowpath 50 to a combustion products exhaust 56 out from the core flowpath 50. The bypass flowpath 52 extends through a bypass duct from an airflow inlet 58 into the bypass flowpath 52 to an airflow exhaust 60 from the bypass flowpath 52, where the bypass duct may be formed by the inner housing structure 28 and the outer housing structure 30. The bypass flowpath 52 and its bypass duct are configured to bypass (e.g., are disposed radially outboard of and extend along) the engine core 48 and the inner housing structure 28.

The propulsor section 42, the LPC section 43A, the HPC section 43B, the combustor section 44, the HPT section 45A and the LPT section 45B may be arranged sequentially along the propulsion system axis 36 within the propulsion system housing 26. The propulsor section 42 includes a bladed propulsor rotor 62; e.g., a fan rotor. The LPC section 43A includes a bladed low pressure compressor (LPC) rotor 63. The HPC section 43B includes a bladed high pressure compressor (HPC) rotor 64. The HPT section 45A includes a bladed high pressure turbine (HPT) rotor 65. The LPT section 45B includes a bladed low pressure turbine (LPT) rotor 66. Each of these engine rotors 62-66 includes a rotor base (e.g., a disk or a hub) and a plurality of rotor blades (e.g., airfoils, vanes, etc.). The rotor blades may be arranged into one or more stages axially along the respective engine rotor 62-66. The rotor blades in each stage are arranged and may be equispaced circumferentially around the respective rotor base in an annular array. Each of the rotor blades is connected to the respective rotor base. The rotor blades, for example, may be formed integral with or mechanically fastened, welded, brazed and/or otherwise attached to the respective rotor base. Each of the rotor blades projects spanwise (e.g., radially) out from the respective rotor base to a distal tip of the respective rotor blade.

The HPC rotor 64 is coupled to and rotatable with the HPT rotor 65. The HPC rotor 64 of FIG. 1, for example, is connected to the HPT rotor 65 through a high speed shaft 68. At least (or only) the HPC rotor 64, the HPT rotor 65 and the high speed shaft 68 collectively form a high speed rotating structure 70A; e.g., a high speed spool of the turbine engine 24 and its engine core 48. This high speed rotating structure 70A of FIG. 1 and its members 64, 65 and 68 are rotatable about the propulsion system axis 36. However, it is contemplated the high speed rotating structure 70A may alternatively be rotatable about another axis radially and/or angularly offset from the rotational axis of the propulsor rotor 62 and/or the centerline axis of the turbine engine 24.

The LPC rotor 63 is coupled to and rotatable with the LPT rotor 66. The LPC rotor 63 of FIG. 1, for example, is connected to the LPT rotor 66 through a (e.g., segmented) low speed shaft structure 72. At least (or only) the LPC rotor 63, the LPT rotor 66 and the low speed shaft structure 72 collectively form a low speed rotating structure 70B; e.g., a low speed spool of the turbine engine 24 and its engine core 48. This low speed rotating structure 70B of FIG. 1 and its members 63, 66 and 72 are rotatable about the propulsion system axis 36. The low speed rotating structure 70B of FIG. 1 therefore is coaxial with the high speed rotating structure 70A as well as the propulsor rotor 62. The low speed rotating structure 70B of FIG. 1 and a shaft section of its low speed shaft structure 72 also protect axially through an inner bore of the high speed rotating structure 70A and its high speed shaft 68. The present disclosure, however, is not limited to such an exemplary arrangement. For example, it is contemplated the low speed rotating structure 70B may alternatively be rotatable about another axis radially and/or angularly offset from the rotational axis of the propulsor rotor 62 and/or the centerline axis of the turbine engine 24.

The low speed rotating structure 70B is coupled to the propulsor rotor 62 through a rotating structure-to-propulsor (RSP) drivetrain 74. The RSP drivetrain 74 may be configured as a geared drivetrain, where a rotating structure-to-propulsor (RSP) geartrain 76 (e.g., a transmission, a speed change device, an epicyclic geartrain, etc.) is disposed between and operatively couples the propulsor rotor 62 to the low speed rotating structure 70B and its LPT rotor 66. With this arrangement, the propulsor rotor 62 may rotate at a different (e.g., slower) rotational speed than the low speed rotating structure 70B and its LPT rotor 66. Here, the propulsor rotor 62 and the low speed rotating structure 70B may rotate in a common (the same) direction about the propulsion system axis 36 or in opposite directions about the propulsion system axis 36 depending, for example, upon the specific configuration of the RSP geartrain 76. Alternatively, the RSP drivetrain 74 may be configured as a direct-drive drivetrain, where the RSP geartrain 76 is omitted. With such an arrangement, the propulsor rotor 62 rotates at a common (the same) rotational speed as the low speed rotating structure 70B and its LPT rotor 66.

The inner housing structure 28 of FIG. 1 includes an inner case 78 (e.g., a core case) for the turbine engine 24, an inner nacelle structure 80 (sometimes referred to as an inner fixed structure (IFS)) and an internal inner housing compartment 82 (e.g., an engine core compartment). The inner case 78 is disposed radially outboard of, extends axially along and may circumscribe one or more or all of the engine sections 43A-45B and the engine rotors 63-66. The inner case 78 may thereby house and provide a support structure for the respective engine sections 43A-45B and the engine rotors 63-66. The inner nacelle structure 80 is configured to provide an aerodynamic cover over the engine core 48 and its inner case 78. The inner housing compartment 82 of FIG. 1 is formed by and is disposed radially between the inner case 78 and an inner barrel of the inner nacelle structure 80. The inner housing structure 28 and its inner nacelle structure 80 may also form a radial inner peripheral boundary of the bypass flowpath 52.

The outer housing structure 30 of FIG. 1 includes an outer case 84 (e.g., a fan case) for the turbine engine 24 and an outer nacelle structure 86. The outer case 84 is disposed radially outboard of, extends axially along and may circumscribe the propulsor section 42 and its propulsor rotor 62. The outer case 84 may thereby house and may be configured as a containment structure for the propulsor section 42 and its propulsor rotor 62. The outer nacelle structure 86 is configured to provide an aerodynamic cover over the outer case 84. The outer housing structure 30 and its outer nacelle structure 86 may also form a radial outer peripheral boundary of the bypass flowpath 52.

During operation of the aircraft propulsion system 22 of FIG. 1, ambient air from an environment 88 external to the aircraft and its aircraft propulsion system 22 enters the aircraft propulsion system 22 and its turbine engine 24 through an airflow inlet 90. This air is propelled by the rotating propulsor rotor 62 in a downstream, aft direction towards the propulsion system aft end 40.

An outer stream of the air propelled by the rotating propulsor rotor 62 is directed into the bypass flowpath 52 through its bypass inlet 58, which air entering the bypass flowpath 52 may be referred to as "bypass air". The guide vane structure 32 conditions (e.g., straightens out, de-swirls, etc.) the flow of the bypass air within the bypass duct. This conditioned bypass air is subsequently directed out of the aircraft propulsion system 22 through the bypass exhaust 60 to provide forward thrust. This propulsion of the bypass air may account for a majority of the forward thrust generated by the aircraft propulsion system 22 and its turbine engine 24 of FIG. 1.

An inner stream of the air propelled by the rotating propulsor rotor 62 is directed into the core flowpath 50 through its core inlet 54, which air entering the core flowpath 50 may be referred to as "core air". This core air is compressed by the LPC rotor 63 and the HPC rotor 64 and is directed into a combustion chamber 92 (e.g., annular combustion chamber) of a combustor 94 (e.g., annular combustor) in the combustor section 44. Fuel is injected into the combustion chamber 92 by one or more fuel injectors 96 and mixed with the compressed core air to provide a fuel-air mixture. This fuel-air mixture is ignited and combustion products thereof flow through and sequentially drive rotation of the HPT rotor 65 and the LPT rotor 66. The rotation of the HPT rotor 65 and the LPT rotor 66 respectively drive rotation of the HPC rotor 64 and the LPC rotor 63 and, thus, compression of the air received from the core inlet 54. The rotation of the LPT rotor 66 also drives rotation of the propulsor rotor 62 through the RSP drivetrain 74 and its RSP geartrain 76.

Referring to FIG. 2, the electric machine system 34 is electrically coupled to an electrical system 98 for the aircraft and its aircraft propulsion system 22. The electric machine system 34 of FIG. 2 includes one or more electric machines 100A and 100B (generally referred to as "100") and one or more electric machine (EM) controllers 102A and 102B (generally referred to as "102"). For ease of description, each electric machine 100 of FIG. 2 is described below as being electrically coupled to, controlled by and/or otherwise associated with a single, dedicated one of the EM controllers 102. However, it is contemplated a single EM controller may alternatively be electrically coupled to, may control and/or may otherwise be associated with multiple electric machines. It is also contemplated multiple EM controllers may be electrically coupled to, may control and/or may otherwise be associated with one or more common electric machines.

Each electric machine 100A, 100B of FIG. 2 includes an electric machine rotor 104A, 104B (generally referred to as "104"), an electric machine stator 106A, 106B (generally referred to as "106") and an electric machine housing 108A, 108B (generally referred to as "108"); e.g., a case. The machine rotor 104A, 104B is rotatable about a rotational axis 110A, 110B (generally referred to as "110") of the machine rotor 104A, 104B, which machine axis 110 may also be an axial centerline of the electric machine 100. The machine stator 106 is disposed next to and in electromagnetic communication with the machine rotor 104. The machine stator 106 of FIG. 2, in particular, is radially outboard of and circumscribes the machine rotor 104. With this arrangement, each electric machine 100 is configured as a radial flux electric machine. The electric machines 100 of the present disclosure, however, are not limited to such an exemplary rotor-stator configuration nor to radial flux arrangements. The machine rotor 104, for example, may alternatively be radially outboard of and circumscribe the machine stator 106. In another example, the machine rotor 104 may be axially next to the machine stator 106 configuring the respective electric machine 100 as an axial flux electric machine. Referring again to FIG. 2, the machine rotor 104 and the machine stator 106 are at least partially or completely housed within an interior of the machine housing 108.

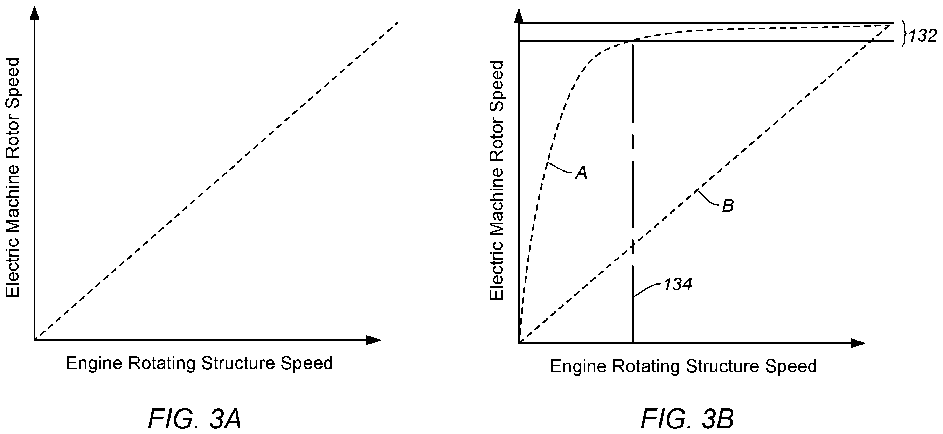

The high speed rotating structure (HS) electric machine 100A is operatively coupled to the high speed rotating structure 70A. The machine rotor 104A of the HS electric machine 100A of FIG. 2, for example, is mechanically coupled to a gear system 112 within a gearbox 114 (e.g., an accessory gearbox) for the turbine engine 24 and its engine core 48. The gearbox gear system 112 of FIG. 2 is mechanically coupled to the high speed rotating structure 70A through a core-to-gearbox (CG) drivetrain 116. This CG drivetrain 116 may be configured as or otherwise include a shaft, a tower shaft assembly, another gearbox (e.g., an angle gearbox), and/or the like. With this arrangement, a rotational speed of the machine rotor 104A of the HS electric machine 100A may be directly tied to a rotational speed of the high speed rotating structure 70A as shown in FIG. 3A. By contrast, referring again to FIG. 2, the HS electric machine 100A and its machine rotor 104A are operatively independent (e.g., operatively decoupled) from the low speed rotating structure 70B. This HS electric machine 100A may thereby be dedicated to the high speed rotating structure 70A. However, it is contemplated the electric machine 100A may alternatively be operatively coupled to and/or dedicated to the low speed rotating structure 70B.

The high speed rotating structure / low speed rotating structure (HSLS) electric machine 100B is operatively coupled to the high speed rotating structure 70A and the low speed rotating structure 70B. The machine rotor 104B of the HSLS electric machine 100B of FIG. 2, for example, is mechanically coupled to the high speed rotating structure 70A and the low speed rotating structure 70B through a differential geartrain 118. Note, the HS electric machine 100A of FIG. 2 is operationally coupled to the high speed rotating structure 70A independent of (e.g., discrete from, not through, etc.) the differential geartrain 118 as described above.

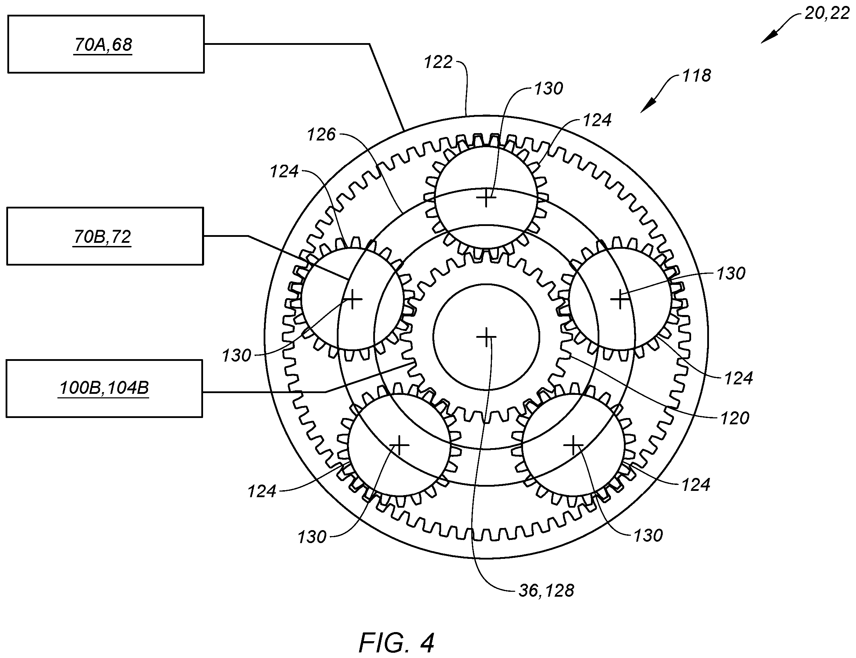

The differential geartrain 118 may be configured as or otherwise include an epicyclic geartrain. The differential geartrain 118 of FIG. 4, for example, includes a sun gear 120, a ring gear 122, a plurality of intermediate gears 124 and a carrier 126. The sun gear 120 is configured to rotate about an axis 128 of the differential geartrain 118, which geartrain axis 128 of FIG. 4 is a rotational axis of the geartrain members 120, 122 and 126 and may be a centerline axis of the differential geartrain 118. The ring gear 122 is configured to rotate about the geartrain axis 128. This ring gear 122 is spaced radially outboard of the sun gear 120. The ring gear 122 also circumscribes the sun gear 120 as well as an array of the intermediate gears 124. The intermediate gears 124 are arranged circumferentially about the sun gear 120 and the geartrain axis 128 in the array; e.g., an annular array. Each of these intermediate gears 124 is disposed radially between and engaged (e.g., meshed) with the sun gear 120 and the ring gear 122. Each of the intermediate gears 124 is rotatably mounted to the carrier 126 such that each intermediate gear 124 is rotatable about a rotational axis 130 of that respective intermediate gear 124, which rotational axis 130 is parallel to and laterally offset from (e.g., spaced radially outboard from) the geartrain axis 128. The carrier 126 is configured to rotate about the geartrain axis 128.

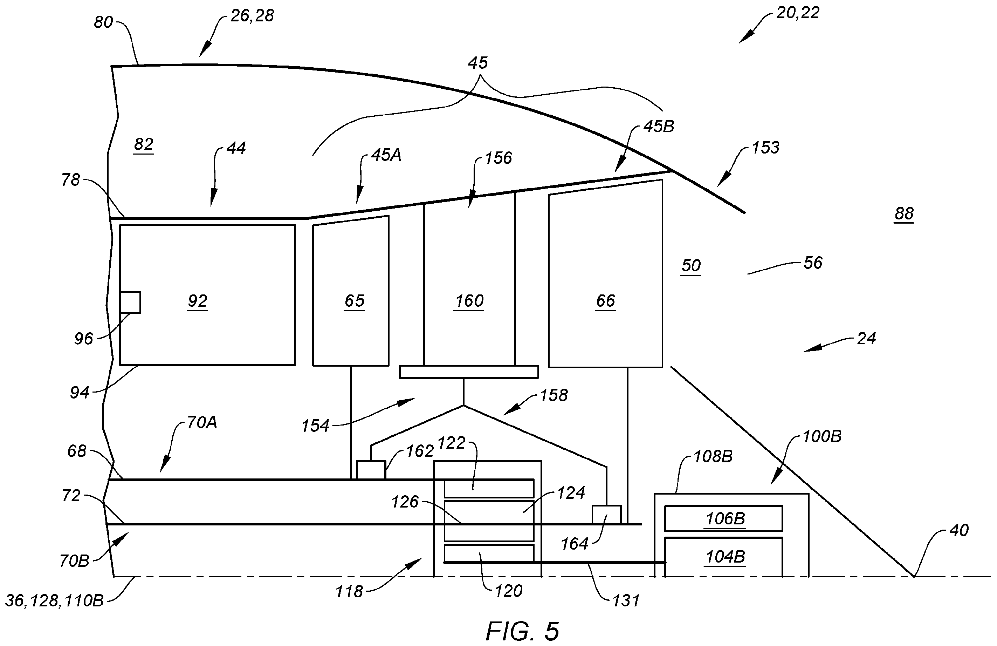

Referring to FIG. 5, the sun gear 120 is mechanically coupled to and rotatable with the machine rotor 104B of the HSLS electric machine 100B via a coupler 131; e.g., a shaft and/or another torque transmission device. The machine rotor 104B of the HSLS electric machine 100B of FIG. 5 is thereby mechanically coupled to the differential geartrain 118 through the sun gear 120 independent of the other geartrain members 122, 124 and 126. The ring gear 122 is mechanically coupled to and rotatable with the high speed rotating structure 70A and its high speed shaft 68. The high speed rotating structure 70A of FIG. 5 is thereby mechanically coupled to the differential geartrain 118 through the ring gear 122 independent of the other geartrain members 120, 124 and 126. The carrier 126 is mechanically coupled to and rotatable with the low speed rotating structure 70B and its low speed shaft structure 72. The low speed rotating structure 70B of FIG. 5 is thereby mechanically coupled to the differential geartrain 118 through the carrier 126 independent of the other geartrain members 120, 122 and 124. Here, the carrier 126 of FIG. 5 functionally forms an intermediate section of the low speed shaft structure 72. With operatively coupling the machine rotor 104B of the HSLS electric machine 100B to the high speed rotating structure 70A and the low speed rotating structure 70B through the differential geartrain 118, a rotational speed (see line A) of the machine rotor 104B of the HSLS electric machine 100B may vary relative to a rotational speed (see line B) of the low speed rotating structure 70B as shown in FIG. 3B. The rotational speed of the machine rotor 104B of the HSLS electric machine 100B may thereby operate within a relatively small speed band 132 when, for example, the low speed rotating structure 70B is rotating above a threshold speed 134. The HSLS electric machine 100B of FIG. 2 may thereby be tailored for operating within the speed band 134 (see FIG. 3B). This may reduce electric machine size, reduce electric machine cooling, increase electric machine efficiency, etc.

Each electric machine 100 of FIG. 2 may be configurable as an electric motor and/or an electric generator; e.g., an electric motor-generator. For example, during a motor mode of operation, a respective electric machine 100 may operate as the electric motor to convert electricity received from the aircraft electrical system 98. The machine stator 106, for example, may generate an electromagnetic field with the machine rotor 104 using a current of electricity received from the aircraft electrical system 98 through the respective EM controller 102. This electromagnetic field may drive rotation of the machine rotor 104. The machine rotor 104, in turn, may provide mechanical power to and drive rotation of the respective engine rotating structure(s) (e.g., the high speed rotating structure 70A for the HS electric machine 100A of FIG. 2, and both engine rotating structures 70 for the HSLS electric machine 100B of FIG. 2). This mechanical power may be provided to boost power or completely power the rotation of the respective engine rotating structure(s) 70. By contrast, during a generator mode of operation, a respective electric machine 100 may operate as the electric generator to convert mechanical power received from the respective engine rotating structure(s) (e.g., the high speed rotating structure 70A for the HS electric machine 100A of FIG. 2, and one or both engine rotating structures 70 for the HSLS electric machine 100B of FIG. 2) into electricity. Rotation of the machine rotor 104, for example, may be rotationally driven by rotation of the respective engine rotating structure(s) 70. The rotation of the machine rotor 104 may generate an electromagnetic field with the machine stator 106, and the machine stator 106 may convert energy from the electromagnetic field into electricity. The respective electric machine 100 may then provide a current of electricity to the aircraft electrical system 98 through the respective EM controller 102 for storage and/or further use. The electric machines 100 of the present disclosure, however, are not limited to such exemplary operation. For example, one, some or all of the electric machines 100 may alternatively each be configured as a dedicated electric generator; e.g., without the electric motor functionality. One, some or all of the electric machines 100 may alternatively each be configured as a dedicated electric motor; e.g., without the electric generator functionality.

Each EM controller 102A, 102B includes a controller housing 136A, 136B (generally referred to as "136") and internal controller circuitry 138A, 138B (generally referred to as "138"). The controller housing 136 may be configured as an enclosed case (e.g., a closed or sealed container) for the respective controller circuitry 138. The controller circuitry 138 is disposed within an interior of the controller housing 136; e.g., an internal chamber or other volume(s) within and enclosed by the controller housing 136. The controller circuitry 138 includes various electrical components, connectors and the like. Examples of the electrical components include, but are not limited to, printed circuit board(s) (PCB(s)), electrical inductor(s), electrical inverter(s), electrical amplifier(s), electrical switch(es) (e.g., contactor(s), relay(s), etc.), a processing device, memory, a communication module, electrical transformer(s), electrical rectifier(s), and/or the like.

Each EM controller 102A, 102B is electrically coupled to a respective one of the electric machines 100A, 100B through one or more electric cables 140A, 140B (generally referred to as "140"); e.g., high voltage electric cables, power feeder cables, etc. More particularly, the controller circuitry 138 of each EM controller 102 is electrically coupled to the respective electric machine 100 and its machine stator 106 through the respective electric cables 140. Similarly, each EM controller 102A, 102B is electrically coupled to an electrical distribution bus 142 of the aircraft electrical system 98 through one or more electric cables 144A, 144B (generally referred to as "144"); e.g., high voltage electric cables, power feeder cables, etc. More particularly, the controller circuitry 138 of each EM controller 102 is electrically coupled to the aircraft electrical system 98 and its electrical distribution bus 142 through the respective electric cables 144.

Each EM controller 102 and its controller circuitry 138 are configured to control operation of a respective one of the electric machines 100. For example, when operating as the electric motor, the respective EM controller 102 and its controller circuitry 138 are configured to regulate a flow of electricity from the aircraft electrical system 98 to the respective electric machine 100. This electricity flow regulation may include: (a) turning-on the flow of electricity from the aircraft electrical system 98 to the respective electric machine 100 (e.g., electrically coupling the respective electric machine 100 to the aircraft electrical system 98); (b) turning-off the flow of electricity from the aircraft electrical system 98 to the respective electric machine 100 (e.g., electrically decoupling the respective electric machine 100 from the aircraft electrical system 98); (c) moderating the flow of electricity from the aircraft electrical system 98 to the respective electric machine 100. Here, the respective EM controller 102 operates as a motor controller. In another example, when operating as the electric generator, the respective EM controller 102 and its controller circuitry 138 are configured to regulate a flow of electricity from the respective electric machine 100 to the aircraft electrical system 98. This electricity flow regulation may include: (a) turning-on the flow of electricity from the respective electric machine 100 to the aircraft electrical system 98 (e.g., electrically coupling the respective electric machine 100 to the aircraft electrical system 98); (b) turning-off the flow of electricity from the respective electric machine 100 to the aircraft electrical system 98 (e.g., electrically decoupling the respective electric machine 100 from the aircraft electrical system 98); (c) moderating the flow of electricity from the respective electric machine 100 to the aircraft electrical system 98. Here, the respective EM controller 102 operates as a generator controller.

The aircraft electrical system 98 includes the electrical distribution bus 142. This aircraft electrical system 98 may also include a power source 146 and/or a power storage 148. The electrical distribution bus 142 is electrically coupled to each of the electric machines 100 through their respective EM controllers 102. The electrical distribution bus 142 is also electrically coupled to the power source 146 and the power storage 148 through one or more respective electric cables 150 and 152; e.g., high voltage electric cables, power feeder cables, etc. Of course, the electrical distribution bus 142 may also be electrically coupled to one or more additional electric components of the aircraft propulsion system 22 and/or one or more additional electric components of the aircraft outside of the aircraft propulsion system 22; e.g., airframe mounted electric components, etc. With this arrangement, the electrical distribution bus 142 provides an intermediate connection between the various electrical members 100A (via 102A), 100B (via 102B), 146 and/or 148. The power source 146 may be an electric generator powered by the turbine engine 24 (see FIG. 1) or an electric generator powered by another aircraft powerplant; e.g., an engine of a companion aircraft propulsion system, an engine of an auxiliary power unit (APU), a fuel cell system, etc. The power storage 148 is configured to receive electricity from the electrical distribution bus 142 for storage. The power storage 148 is also configured to provide the stored electricity to the electrical distribution bus 142. The power storage 148, for example, may be configured as or otherwise include one or more electricity storage devices; e.g., batteries, super capacitors, etc. Of course, it is contemplated one or more of the electric machines 100A, 100B (e.g., operating as the electric generator(s)) may also or alternatively operate as a power source for another one or more of the electric machines 100B, 100A (e.g., operating as the electric motor(s)).

In some embodiments, referring to FIG. 1, the HSLS electric machine 100B and its machine rotor 104B may be coaxial with one or both of the engine rotating structures 70A and/or 70B. With this arrangement, the HSLS electric machine 100B may be disposed radially inboard of the core flowpath 50. The HSLS electric machine 100B of FIG. 1, for example, is located radially inboard of the LPT section 45B and/or an exhaust structure 153 forming the core exhaust 56. By contrast, the HS electric machine 100A and its machine rotor 104 may be non-coaxial with the HSLS electric machine 100B and its machine rotor 104 and/or the engine rotating structures 70. The machine axis 110A (see FIG. 2), for example, is laterally offset (e.g., spaced radially outboard) from the propulsion system axis 36. With this arrangement, the HS electric machine 100A may be disposed radially outboard of the engine core 48 and the core flowpath 50. The HS electric machine 100A of FIG. 1, for example, is located in the inner housing compartment 82 along with the gearbox 114. The present disclosure, however, is not limited to such an exemplary arrangement. For example, it is contemplated the HS electric machine 100A may alternatively be arranged elsewhere within the aircraft propulsion system 22; e.g., within an internal compartment of the outer housing structure 30 where, for example, a tower shaft extends across the bypass flowpath through a bifurcation (not shown) coupling the gearbox 114 to the engine core 48.

In some embodiments, referring to FIG. 5, the turbine engine 24 may include a turbine frame structure 154. This turbine frame structure 154 includes a turbine vane array 156 and an inner support frame 158. The turbine vane array 156 is arranged along the core flowpath 50 between (a) the HPT section 45A and its HPT rotor 65 and (b) the LPT section 45B and its LPT rotor 66. The turbine vane array 156 includes a plurality of turbine vanes 160 arranged circumferentially about the propulsion system axis 36. Each of these turbine vanes 160 extends radially across the core flowpath 50. The turbine vane array 156 and its turbine vanes 160 may be configured to condition the combustion products exhausted from the HPT section 45A for efficient interaction with a first stage of the LPT rotor 66 in the LPT section 45B. The inner support frame 158 is disposed radially inboard of the turbine vane array 156 and the core flowpath 50. This inner support frame 158 is configured to support (a) the high speed rotating structure 70A and its high speed shaft 68 through a first bearing 162 and/or (b) the low speed rotating structure 70B and its low speed shaft structure 72 through a second bearing 164. The turbine frame structure 154 and its inner support frame 158 may thereby support the differential geartrain 118. Here, the differential geartrain 118 of FIG. 5 is located axially between the first bearing 162 and the second bearing 164.

In some embodiments, the differential geartrain 118 may be disposed axially between (a) the HSLS electric machine 100B and (b) the combustor section 44 and its combustor 94 along the propulsion system axis 36. More particularly, the differential geartrain 118 may be disposed axially between the HSLS electric machine 100B and the HPT section 45A along the propulsion system axis 36. The differential geartrain 118 of FIG. 5, for example, is disposed radially inboard of the core flowpath 50 along the turbine section 45 and, more particularly, between (a) the HPT section 45A and its HPT rotor 65 and (b) the LPT section 45B and its LPT rotor 66. Here, the turbine section 45 axially overlaps and circumscribes the differential geartrain 118.

In some embodiments, the HSLS electric machine 100B may be disposed radially inboard of the core flowpath 50 along the turbine section 45. The LPT section 45B and its LPT rotor 66 of FIG. 5, for example, axially overlap and circumscribe at least a forward portion of the HSLS electric machine 100B. An aft portion of the HSLS electric machine 100B may also or alternatively be housed within the exhaust structure 153.

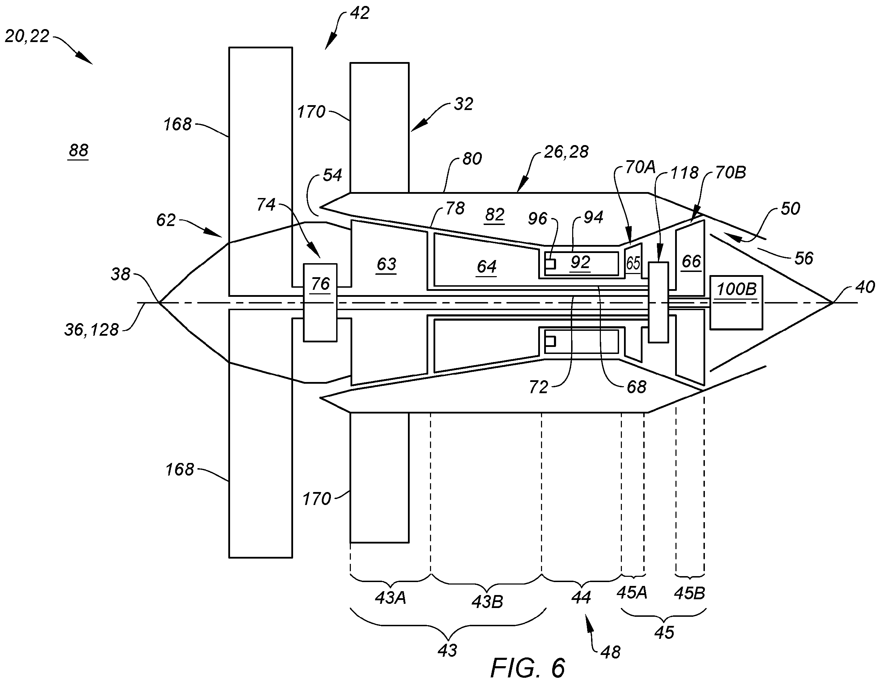

The aircraft propulsion system 22 of FIG. 1 is described above as a ducted propulsor propulsion system; e.g., the turbofan propulsion system. The present disclosure, however, is not limited to such an exemplary aircraft propulsion system. For example, referring to FIG. 6, the outer housing structure 30 (see FIG. 1) may be omitted from the propulsion system housing 26 to open the propulsor rotor 62 up to the external environment 88. More particularly, the propulsor rotor 62 of FIG. 6 includes a plurality of open propulsor blades 168 arranged circumferentially about the propulsion system axis 36 in an array; e.g., a circular array. This array of the propulsor blades 168 may be unshrouded or alternatively shrouded by a tubular propulsor rotor shroud dedicated to the propulsor rotor 62 for example. Each of these propulsor blades 168 projects spanwise (e.g., radially) out from a base of the propulsor rotor 62, into the external environment 88, to a distal tip of the respective propulsor blade 168. Each propulsor blade 168 is thereby configured as an un-ducted propulsor blade which is exposed to (e.g., disposed in) the surrounding external environment 88. With this arrangement, the propulsor rotor 62 is an open propulsor rotor (e.g., an un-ducted propulsor rotor) and the aircraft propulsion system 22 is configured as an open rotor propulsion system. Moreover, the inner housing structure 28 and its members may form an exterior of the aircraft propulsion system 22 and may border the external environment 88.

The guide vane structure 32 may also be open to the external environment 88 forming an open guide vane structure. This guide vane structure 32 of FIG. 6 includes a plurality of open exit guide vanes 170; e.g., airfoils. The guide vanes 170 are arranged and may (or may not) be equispaced circumferentially about the propulsion system axis 36 in an array; e.g., a circular array. This array of the guide vanes 170 may be unshrouded or alternatively shrouded by a tubular guide vane shroud dedicated to the guide vane structure 32 for example. This guide vane structure 32 and its guide vanes 170 are arranged axially next to (e.g., adjacent) the propulsor rotor 62 and its propulsor blades 168. The guide vane structure 32 and its guide vanes 170 of FIG. 6, for example, are arranged downstream of the propulsor rotor 62 and its propulsor blades 168, without (e.g., any) other elements axially therebetween to obstruct, turn and/or otherwise influence the air propelled by the propulsor rotor 62 to the guide vane structure 32. Each of the guide vanes 170 projects radially out from an exterior surface of the inner housing structure 28, into the external environment 88, to a distal tip of the respective guide vane 170. Each guide vane 170 is thereby configured as an un-ducted guide vane which is exposed to (e.g., disposed in) the surrounding external environment 88. With the foregoing arrangement, the guide vane structure 32 and its guide vanes 170 are configured to condition (e.g., straighten out, de-swirl, etc.) an outer stream of air propelled by the propulsor rotor 62 within the external environment 88 that bypass the engine core 48. Of course, in other embodiments, the guide vane structure 32 may be omitted where, for example, the aircraft propulsion system 22 is alternatively configured as a counter-rotating open rotor (CROR) aircraft propulsion system, etc.

While the turbine engine 24 in FIG. 1 and FIG. 6 is shown with a particular two rotating structure arrangement (e.g., a two-spool architecture), the present disclosure is not limited thereto. For example, the LPC rotor 63 may be omitted to configure the LPT rotor 66 as a power turbine (PT) rotor for the propulsor rotor 62. The turbine engine 24 may also or alternatively include another rotating structure with a bladed compressor rotor in the compressor section 43 and a bladed turbine rotor in the turbine section 45; e.g., an intermediate speed spool for the engine core 48.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An assembly for an aircraft powerplant (20), comprising:
a compressor section (43);
a combustor section (44);
a turbine section (45);
a flowpath extending through the compressor section (43), the combustor section (44) and the turbine section (45);
a first rotating structure (70A) comprising a first turbine rotor (65) arranged along the flowpath in the turbine section (45);
a second rotating structure (70B) comprising a second turbine rotor (66) arranged along the flowpath in the turbine section (45);
a first electric machine (100B) comprising a first electric machine rotor (104B) coaxial with the first rotating structure (70A) and the second rotating structure (70B); and
a differential geartrain (118) operatively coupling the first electric machine rotor (104B) to the first rotating structure (70A) and the second rotating structure (70B).

2. The assembly of claim 1, wherein the differential geartrain (118) comprises an epicyclic geartrain.

3. The assembly of claim 1 or 2, wherein the differential geartrain (118) includes:
a sun gear (120) coupled to the first electric machine rotor (104B);
a ring gear (122) coupled to the first engine rotating structure (70A);
a plurality of intermediate gears (124) arranged circumferentially around the sun gear (120) in an array, each of the plurality of intermediate gears (124) radially between and meshed with the sun gear (120) and the ring gear (122); and
a carrier (126) coupled to the second engine rotating structure (70B), each of the plurality of intermediate gears (124) rotatably attached to the carrier (126),
wherein, optionally:
the combustor section (44) comprises a combustor (94); and
the first turbine rotor (65) is arranged along the flowpath between the combustor (94) and the second turbine rotor (66).

4. The assembly of claim 1, 2 or 3, further comprising:
a second electric machine (100A) comprising a second electric machine rotor (104A);
the second electric machine rotor (104A) operatively coupled to the first engine rotating structure independent of the differential geartrain (118).

5. The assembly of claim 4, wherein:
the first electric machine (100B) is arranged radially inboard of the core flowpath; and
the second electric machine (100A) is arranged radially outboard of the core flowpath.

6. The assembly of any preceding claim, wherein:
the first electric machine rotor (104B) is rotatable about an axis; and
the differential geartrain (118) is disposed axially between the first electric machine (100B) and the combustor section (44) along the axis.

7. The assembly of any preceding claim, wherein:
the first electric machine rotor (104B) is rotatable about an axis; and
the turbine section (45) axially overlaps the differential geartrain (118).

8. The assembly of any preceding claim, wherein:
the first electric machine rotor (104B) is rotatable about an axis; and
the second turbine rotor (66) axially overlaps the first electric machine (100B).

9. The assembly of any preceding claim, further comprising:
a turbine frame structure (154) supporting the differential geartrain (118), the turbine frame structure (154) comprising a vane array;
the turbine section (45) including a first turbine section (45A) and a second turbine section (45B) with the vane array between the first turbine section (45A) and the second turbine section (45B) along the flowpath,
wherein, optionally:
the first turbine rotor (65) is disposed in the first turbine section (45A); and
the second turbine rotor (66) is disposed in the second turbine section (45B).

10. The assembly of any preceding claim, further comprising a propulsor rotor (62) operatively coupled to the second engine rotating structure (70B) independent of the differential geartrain (118).

11. The assembly of claim 10, further comprising a second geartrain (76) operatively coupled between the second engine rotating structure and the propulsor rotor (62).

12. The assembly of claim 10 or 11, wherein:
the propulsor rotor (62) is a ducted propulsor rotor (62); or
the propulsor rotor (62) is an open propulsor rotor (62).

13. The assembly of any preceding claim, wherein the first electric machine (100B) is configurable as at least one of an electric motor during an electric motor mode of operation or an electric generator during an electric generator mode of operation.

14. An assembly for an aircraft powerplant (20), comprising:
a compressor section (43);
a combustor section (44);
a turbine section (45);
a flowpath extending through the compressor section (43), the combustor section (44) and the turbine section (45);
a first rotating structure (70A) comprising a first turbine rotor (65) arranged along the flowpath in the turbine section (45);
a second rotating structure (70B) comprising a second turbine rotor (66) arranged along the flowpath in the turbine section (45);
a first electric machine (100B) comprising a first electric machine rotor (104B);
a differential geartrain (118) operatively coupling the first electric machine rotor (104B) to the first rotating structure (70A) and the second rotating structure (70B); and
a second electric machine (100A) comprising a second electric machine rotor (104A) that is operatively coupled to the first rotating structure (70A) independent of the differential geartrain (118),
wherein, optionally:
the second rotating structure further comprises a shaft section projecting axially through a bore of the first rotating structure; and/or
the first electric machine rotor (104B) is coaxial with at least one of the first rotating structure or the second rotating structure; and/or
an axis of the first electric machine rotor (104B) is offset from an axis of the second electric machine rotor (104A).

15. An assembly for an aircraft powerplant (20), comprising:
a compressor section (43);
a combustor section (44);
a turbine section (45);
a flowpath extending through the compressor section (43), the combustor section (44) and the turbine section (45);
a first rotating structure (70A) comprising a first turbine rotor (65) arranged along the flowpath in the turbine section (45);
a second rotating structure (70B) comprising a second turbine rotor (66) arranged along the flowpath in the turbine section (45);
a first electric machine (100B) comprising a first electric machine rotor (104B) that is rotatable about an axis; and
a differential geartrain (118) operatively coupling the first electric machine rotor (104B) to the first rotating structure (70A) and the second rotating structure (70B);
the turbine section (45) radially outboard of and axially overlapping the first electric machine (100B) and the differential geartrain (118), and the differential geartrain (118) disposed axially between the first electric machine (100B) and the combustor section (44) along the axis.
